# EUROPÄISCHE PATENTSCHRIFT

(11) **EP 2 395 507 B1**
(45) Veröffentlichungstag und Bekanntmachung des Hinweises auf die Patenterteilung: **25.07.2012**
(21) Anmeldenummer: 10005177.0
(22) Anmeldetag: 18.05.2010
(51) Int. Cl.: G11B 7/007, G11B 7/24, G11B 7/26, G11B 23/00

(54) **Optische Datenträgerscheibe**
Optical data carrier disc
Disque de support de données optique

(43) Veröffentlichungstag der Anmeldung: 14.12.2011
(73) Patentinhaber: Elsässer, Volker, 72160 Horb (DE)
(72) Erfinder: Elsässer, Volker, 72160 Horb (DE)
(74) Vertreter: Klocke, Peter

(56) Entgegenhaltungen:
- EP-A1- 0 108 258
- EP-A1- 1 207 527
- US-A1- 2003 156 517
- US-A1- 2008 057 258

## Beschreibung

Die Erfindung betrifft eine Datenträgerscheibe, die mittels einer optischen Abtasteinrichtung lesbar ist, mit einer Informationsschicht, die Informationen in einer Datenstruktur codiert enthält, welche als spiralförmig verlaufende Reliefdatenspur an der Informationsschicht angeordnet ist und mit einer für die optische Abtasteinrichtung auf der Seite mit der Reliefdatenspur durchsichtigen Abdeckung für die Informationsschicht.

Derartige optische Datenträgerscheiben werden gewöhnlich als Speichereinrichtungen in Computern und Produkten der Unterhaltungselektronik verwendet. Es gibt sie in drei lesbaren, sich prinzipiell in der Beschreibbarkeit voneinander unterscheidenden Ausführungsformen, nämlich als nicht beschreibbare, einmalig beschreibbare oder mehrfach beschreibbare Datenträgerscheibe. Seit der Einführung der Compakt-Disk (CD) wurden weitere optische Datenträgerscheiben wie etwa die digitale Versatile-Disk (DVD) und die Blu-Ray Disk (BD) entwickelt, um die Speicherkapazität dieser Medien zu vergrößern. Die zu speichernden Informationen werden auf derartige Datenträgerscheiben in einer Informationsschicht als codierte Binärdaten auf einer spiralförmigen Datenspur als Folge von Vertiefungen (Pits) eingebracht, die durch sogenannte Lands voneinander getrennt sind. Die Längen der Pits und der Lands stellen die gespeicherten Binärdaten dar, die mittels eines fokussierten, der Reliefdatenspur nachgeführten Laserstrahls nach dem Interferenzprinzip auslesbar sind. Die Erhöhung der Datenkapazität der Datenträgerscheiben erfolgt gewöhnlich durch Verkleinern der Pits und Lands auf der Datenspur. Ausgehend von einer CD- Kapazität von etwa 800 MB können dadurch bei einschichtig ausgeführten DVD's bzw. BD's Speicherkapazitäten von etwa 5 GB bzw. 50 GB erreicht werden. Bei mehrschichtig ausgeführten DVD's und BD's entsprechend mehr. Um die Pits und Lands unterschiedlicher Größe problemlos lesen zu können, verwenden Schreib-und Leseeinrichtungen für CD's, DVD's und BD's unterschiedliche Wellenlängen für den Laserstrahl und unterschiedliche numerische Aperturen bei der fokussierenden Linse. In der Regel beträgt die Wellenlänge für CD's 780 nm, für DVD's etwa 660 nm und für BD's ungefähr 405 nm, denen ein typischer Aperturwert 0,45, 0,65 bzw. 0,85 zugeordnet ist.

Unbeschreibbare und/oder mittels eines Laserstrahls beschreibbare optische Datenträgerscheiben durchlaufen bei der Herstellung einen zumindest teilweise unterschiedlichen Herstellungsprozess, bei dem zumindest die Datenspur mit oder ohne Pits und Lands erzeugt wird. Bei jedem Datenträgerscheibentyp werden dabei gleichzeitig oder später die Informationen als codierte Daten entlang der Datenspur platziert, wobei die Art und Weise, in der die Daten eingebracht werden, von dem Typ der Datenträgerscheibe abhängt. Für die Herstellung der vorgenannten optischen Datenträgerscheiben sind Normen zu beachten, die die Datenstruktur auf der Informationsschicht und die Körpermaße der Datenträgerscheibe betreffen.

Gewöhnlich werden gattungsgemäße optische Datenträgerscheiben in großen Stückzahlen bei möglichst niedrigen Stückkosten hergestellt. Beispielsweise werden nur-lesbare optische Datenträgerscheiben durch einen wohl bekannten Fertigungsprozess, der als Prägen bekannt ist, unter Einsatz einer Spritzgießmaschine gefertigt. Dabei wird ein Prägestempel verwendet, der die Datenstruktur als Negativform enthält. Das Ausgangsmaterial für diese Art der Datenträgerscheibenherstellung ist flüssiges Polycarbonat, das in eine Form gepresst wird, die den Prägestempel enthält, und das anschließend mit Aluminium beschichtet und versiegelt wird.

Die Aluminiumschicht wie auch die auf die Aluminiumschicht aufgebrachte Schutzlackschicht altern durch Umwelteinflüsse wie beispielsweise Temperaturschwankungen, Sonnenlichtbeaufschlagung und hohe Luftfeuchte zunehmend, was bereits nach einigen Jahren zu Leseproblemen beim optischen Abtasten der Pits und Lands der Datenträgerscheibe führen kann. Man geht davon aus, dass eine optimale Lebensdauer durch Lagerung der Datenträgerscheibe bei konstant 20° C in absoluter Dunkelheit und bei geringer Luftfeuchte erreicht wird. Schätzungen wie lange die auf dem Datenträger gespeicherten Informationen effektiv und fehlerfrei gelesen werden können, schwanken zwischen 10 und 50 Jahren. Sicher ist, das Daten auf einer solchen Datenträgerscheibe bedeutend kürzer als auf Papier oder Pergament sicher aufbewahrbar sind. Damit sind derartige Datenträger nur bedingt geeignet, um wichtige Informationen über einen langen Zeitraum Zuverlässig lesbar zu speichern, wie es beispielsweise bei der elektronischen Archivierung von wertvollem Archivgut wünschenswert ist. Unter wertvollem Archivgut werden Schriftstücke, Akten, Karten, Pläne, Bild-, Film- und Tonmaterialien sowie sonstige Aufzeichnungen verstanden, die einen bleibenden Wert besitzen.

Zum Stand der Technik wird auf die Druckschriften EP 0 108 258 A1, US 2003/156517 A1, EP 1 207 527 A1 und US 2008/057258 A1 verwiesen.

Die Druckschrift EP 0 108 258 A1 offenbart eine Matrizenplatte zur Herstellung von optischen Datenträgerscheiben, bei denen die Pits und Lands in einer Spurrille angeordnet sind, sowie ein Verfahren zur Herstellung der Matrizenplatte. Die Matrizenplatte weist ein aus thermoplastischem Kunststoffmaterial gespritztes Substrat mit einer optisch flachen Oberfläche auf, auf der eine erste Schicht aus fotosensitivem Material angeordnet ist, die eine zweite Schicht aus einem anderen fotosensitivem Material trägt. Das Photoresist der ersten und zweiten Schicht weist eine unterschiedliche Lichtempfindlichkeit gegenüber Laserlicht unterschiedlicher Wellenlänge auf, so dass die beiden Schichten mittels Laserstrahlen mit entsprechend unterschiedlicher Wellenlänge unabhängig voneinander strukturiert werden können, um eine Reliefdatenspur mit Pits und Lands in zwei übereinander angeordneten Ebenen zu erzeugen. Diese Matrizenplatte dient als Masterdisk zur Herstellung von optischen Datenträgerscheiben, von der zuerst ein negativ ausgebildeter Oberflächenabdruck in bekannter Art und Weise hergestellt, der als Prägestempel für eine Spritzgießform vorgesehen ist, mit der Rohlinge für eine optische Datenträgerscheibe hergestellt werden. Die Rohlinge werden anschließend wie üblich mit einer dünnen galvanisch aufgebrachten Metalllage als Reflexionsschicht versehen. Die Datenträgerscheibe ist dünnschichtig und flexibel ausgebildet und wird auf eine mehrfach dickere Glasscheibe aufgeklebt, um eine mechanisch stabile optische Datenträgerplatte zu erhalten. Mittels zwei derartiger Datenträgerplatten, die jeweils nur eine Informationsschicht, jedoch mit unterschiedlichen Informationen in der Datenstruktur aufweisen, kann eine optische Doppel-Datenträgerplatte erzeugt werden. Dazu werden die beiden Datenträgerplatten mit geringem Abstand, der von Abstandshaltern geringer Stärke bestimmt ist, mit voneinander abgewandten Glasplatten übereinander angeordnet und die Glasplatten an ihrem Außen- und Innenumfang dichtend miteinander verbunden.

Die Offenlegungsschrift US 2003/0156517 A1 lehrt ein optisches Laufwerk und ein Verfahren zum Beschreiben und Auslesen von PMA- und TOC-Bereichen einer optischen Datenträgerscheibe. Die PMA- und TOC-Informationen sind dem Lead-in-Abschnitt der Reliefdatenspur zugeordnet. Der Lead-in-Bereich ist dabei an der üblichen Stelle der Reliefdatenspur nahe dem Innenumfang der optischen Datenträgerscheibe angeordnet. Durch gezieltes Auslesen und Auswerten der Informationen des Lead-in-Abschnittes kann der Spin-up-Prozess und Damit die Startzeit der Datenträgerscheibe deutlich verbessert werden.

Die Offenlegungsschrift EP 1 207 527 A1 behandelt ein Verfahren und eine Vorrichtung zur Bestimmung eines Haupt-Parameterwertes eines Speichermediums, der zum Abspielen des Speichermediums benötigt wird, das mehrere physikalische und mehrere logische Datensektoren aufweist, sowie einen Einlaufbereich (Lead-in), der den Haupt-Parameterwert enthält und einen anderen Datenbereich, der andere Daten enthält. Dabei ist der Haupt-Parameterwert eine physikalische Sektornummer für das Speichermedium, der durch Lesen und Bewerten von Daten aus dem anderen Datenbereich bestimmt wird, ohne den Haupt-Parameterwert aus dem Einlaufbereich zu lesen. Die vorgeschlagene Vorrichtung umfasst die dazu nötigen Mittel.

Die Druckschrift US 2008/0057258 A1 schlägt eine optische Datenträgerscheibe mit einem Zusatzspeicher vor. Der Zusatzspeicher ist in das Kunststoffmaterial der Datenträgerscheibe eingebettet und umfasst ein berührungslos auslesbares RFID-Element mit Antenne. Der elektronische Zusatzspeicher wird beim Pressen des Rohlings für die optische Datenträgerscheibe mit Kunststoff umspritzt. Ausgehend von dem vorstehend beschriebenen Stand der Technik liegt der Erfindung die Aufgabe zugrunde, eine Möglichkeit vorzuschlagen, die die Archivierung von Archivgut mit einer erhöhten Langzeitzuverlässigkeit auf optischen Datenträgerscheiben ermöglicht.

Diese Aufgabe wird erfindungsgemäß durch eine optische Datenträgerscheibe mit den Merkmalen des Patentanspruchs 1 gelöst. Weitere vorteilhafte Ausgestaltungen sind den rückbezogenen Unteransprüchen zu entnehmen.

Danach weist die erfindungsgemäße Datenträgerscheibe, die mittels einer optischen Abtasteinrichtung lesbar ist, eine Informationsschicht auf, die ein Halbfertigprägestempel für die Prägestempelherstellung von unter Einsatz einer Spritzgießmaschine herzustellenden optischen Datenträgerscheiben ist. Der Halbfertigungsprägestempel ist von einer Metallplatte, vorzugsweise einer Nickelplatte gebildet, wobei die Metallplatte zwischen zwei transparenten Abdeckscheiben angeordnet ist, die zumindest an den Rändern der Datenträgerscheibe miteinander und/oder mit dem Halbfertigprägestempel abdichtend verbunden sind. Die Informationsschicht enthält die gespeicherten Informationen in einer Datenstruktur codiert, welche als spiralförmig verlaufende Reliefdatenspur auf der Informationsschicht angeordnet ist. Die beiden Abdeckscheiben schützen den Halbfertigprägestempel vor äußeren Einflüssen und sind für die optische Abtasteinrichtung zumindest auf der Seite der Datenstruktur des Halbfertigprägestempels durchsichtig. Damit kann der von der Abtasteinrichtung ausgehende Laserstrahls Pits und Lands der Reliefdatenspur wie bei herkömmlichen optischen Datenträgerscheiben problemlos abtasten.

Für die Herstellung des Halbfertigprägestempels wird zuerst ein Glasmaster wie bei der üblichen Herstellung für die Erzeugung eines Prägestempels für eine Datenträgerscheiben-Spritzgießform angefertigt. Beispielsweise umfasst die Herstellung eines solchen Glasmasters gemäß dem Stand der Technik das Beschichten einer Glasplatte mit einem fotosensitiven Material und danach das Aushärten dieses Photoresists, bevor die Oberfläche der beschichteten Glasplatte mit einem modulierten Laserstrahl bestrahlt wird, um eine spiralförmige Reliefdatenspur mit Informationen in dem Photoresistmaterial aufzuzeichnen. Bei der Laserbestrahlung werden diejenigen Bereiche des ausgehärteten Photoresists dem Laserlicht ausgesetzt, die Pits bilden sollen. Danach wird die Masterglasplatte einem Atz- oder Entwicklungsvorgang unterworfen, bei dem ein Muster in Form von aufeinander folgenden Pits als spiralförmig verlaufende Reliefdatenspur erzeugt wird, d.h. die Oberfläche der Masterglasplatte wird mit einer erhabenen Struktur versehen. Nach einem Trocknungsvorgang wird die mit der Reliefdatenspur versehene strukturierte Oberfläche der Glasplatte metallisiert, beispielsweise durch Vakuumablagerung oder durch Aufsprühen einer dünnen leitfähigen Metallschicht (Metalllage). Der so erzeugte Glasmaster ist ein

Mehrlagenaufbau, der eine Glaslage, eine strukturierte Photoresistlage und eine dünne leitfähige strukturierte Metalllage besitzt. Die Metalllage kann beispielsweise aus Nickel oder Silber bestehen. Bei Blu-Ray wird an Stelle der Metalllage eine Lage aus einem sog. Phase-Transition-Material (PTM) verwendet.

Darauf folgt der eigentliche Schritt des Erzeugens des Halbfertigprägestempels unter Verwendung des Glasmasters beispielsweise gemäß dem Stand der Technik durch galvanisches Ablagern von Nickel auf der Metalllage des Glasmasters. Damit wird die Metalllage mit der Nickelschicht verstärkt und anschließend zusammen mit der Nickelschicht von der Photoresistlage des Glasmasters getrennt. Nach der Trennung muss bei Silber als Metalllage eine Reinigung erfolgen. Bei Blu-Ray ist dies nicht erforderlich. Die Trennung führt zu einer Nickelplatte mit einer spiralförmig verlaufenden Reliefdatenspur, die als Informationsschicht für die vorgeschlagenen optische Datenträgerscheibe verwendet wird. Grundsätzlich kann anstelle von Nickel auch ein anderes Metall mit gleichartigen Eigenschaften verwendet werden.

Bei der erfindungsgemäßen optischen Datenträgerscheibe können die Abdeckscheiben und der Halbfertigprägestempel rund ausgebildet sein und eine zentrale runde Aufnahmeöffnung für das Lesegerät aufweisen. Dazu werden die Aufnahmeöffnung und der Außenkontur der beiden Abdeckscheiben und des Halbfertigprägestempel jeweils durch eine Stanzung vor dem Verbinden miteinander ausgebildet. Die so hergestellte Datenträgerscheibe entspricht im Außendurchmesser und im Durchmesser der Aufnahmeöffnung vorzugsweise den bestehenden Normen für gängige CD's, DVD's und/oder BD's. Die Abdeckscheiben sind dabei aus Licht durchlässigem Glas oder Polycarbonat hergestellt. In der Stärke entspricht die erfindungsgemäße Datenträgerscheibe idealerweise ebenfalls den bestehenden Normen, wobei die Stärke der Abdeckscheiben abhängig von der Dicke des erzeugten Halbfertigprägestempels ist.

Zum Schutz des Halbfertigprägestempels vor äußeren Einflüssen schließen die beiden Abdeckscheiben den Halbfertigprägestempel vollständig zwischen sich ein. Sie sind abhängig von den inneren und äußeren Umfangsmaßen des Halbfertigprägestempels und der Abdeckscheiben an ihren äußeren und/oder inneren Rändern an den entsprechenden Rändern der Datenträgerscheibe miteinander und/oder mit den zugeordneten Rändern des Halbfertigprägestempels dichtend verbunden. Zum Bilden einer Einheit können die Abdeckscheiben miteinander und/oder mit dem Halbfertigprägestempel entweder mittels eines Bördelringes oder mehrerer Befestigungsschrauben an dem Außenumfang und/oder dem Innenumfang miteinander verbunden sein. Alternativ können die Abdeckscheiben miteinander oder mit dem Halbfertigprägestempel vollflächig oder an dem Außenumfang und/oder den Innenumfang, unter Verwendung eines Klebstoffes mit geeignetem Brechungsindex (1,515) miteinander verklebt sein. Für den Fall, dass die Abdeckscheiben und der Halbfertigprägestempel nur an den Rändern der Datenträgerscheibe miteinander verbunden sind, kann zweckmäßigerweise noch ein Ölfilm zwischen dem Halbfertigprägestempel und den Abdeckscheiben angeordnet sein, um die Pits luftfrei zu halten, damit der Brechungsindex 1,515 gewährleistet ist.

Prinzipiell kann die Speicherkapazität der erfindungsgemäßen Datenträgerscheibe erhöht werden, indem anstelle eines Halbfertigprägestempel zwei unterschiedliche Halbfertigprägestempel zwischen die Abdeckscheiben eingebracht werden. Es ist selbstverständlich, dass dabei die beiden Halbfertigprägestempel derart zueinander angeordnet sind, dass die Reliefdatenspuren jeweils den Abdeckscheiben gegenüberliegen. Hier sind beide Abdeckscheiben durchsichtig.

In einer Ausführungsform der Erfindung entspricht die Datenstruktur der erfindungsgemäßen optischen Datenträgerscheibe den Vorgaben der Normen vollständig. Sie weist entlang der Reliefdatenspur einen Lead-in-Abschnitt, einen Daten-Abschnitt sowie einen Lead-out-Abschnitt auf, die aneinander anschließen. Damit ist die vorgeschlagene neue "read-only" Datenträgerscheibe auf bestehenden Lesegeräten problemlos lesbar. Derartige Lesegeräte führen vor dem Lesen des Datenabschnittes eine Disk-Ladeprozedur durch, bei der die Steuerdaten aus dem Lead-in-Abschnitt abgerufen werden können, wenn die Datenträgerscheibe entsprechend einem vordefinierten Standard entsprechend formatiert ist. Im Lead-in-Abschnitt, der der innerste lesbare Bereich der Daten-trägerscheibe ist, sind üblicherweise Organisationsinformationen wie zum Beispiel das Inhaltsverzeichnis der Datenträgerscheibe hinterlegt. Der Lead-out-Abschnitt ist dabei das Gegenstück zu dem Lead-in-Abschnitt und definiert das Ende des Datenabschnittes der optischen Datenträgerscheibe. Er dient lediglich als Schlussmarke und hat ansonsten keine spezielle Funktion.

Bei einer bevorzugten Ausführungsform der Erfindung weist die Datenstruktur hingegen einen Lead-in-Abschnitt auf, dessen Reliefdatenspur entgegen dem üblichen Standard unvollständige oder keine Organisationsinformationen der Datenstruktur enthält. Damit ist eine solche optische Datenträgerscheibe nicht mehr mit herkömmlichen Lesegeräten lesbar. Die für das Auslesen des Datenbereiches benötigten Organisationsinformationen sind dann an anderer Stelle auf der Datenträgerscheibe abgelegt. Sie sind vorzugsweise in einem gesonderten berührungslos auslesbaren Zusatzspeicher in Form von elektrischen, magnetischen oder optischen Strukturen hinterlegt. Bevorzugt wird ein elektronischer Zusatzspeicher in Form eines RFID-Elementes verwendet, der optional auch berührungslos beschreibbar ist. Der Zusatzspeicher ist vorzugsweise zwischen den Abdeckscheiben außerhalb der Reliefdatenspur der Datenträgerscheibe vor Beschädigung und Verlust geschützt angeordnet. Er kann jedoch auch außen auf einer der Abdeckscheiben angeordnet sein.

Bei einer Ausführungsform der erfindungsgemäßen optischen Datenträgerscheibe weist die Datenstruktur einen Lead-in-Abschnitt auf, der entgegen dem üblichen Standard an einer anderen Stelle der Reliefdatenspur angeordnet ist und der vollständige Organisationsinformationen zu der Datenstruktur enthält. Die Position des Lead-in-Abschnitts auf der Datenträgerscheibe ist dabei vorzugsweise in einem gesonderten berührungslos auslesbaren Zusatzspeicher, beispielsweise in einem an oder in die Datenträgerscheibe angeordneten RFID-Element gespeichert ist. Damit ist eine solche optische Datenträgerscheibe nicht mehr ohne Weiteres mit herkömmlichen Lesegeräten lesbar. Es wird auch in diesem Fall ein spezielles Lesegerät benötigt, das auf den Zusatzspeicher automatisch zugreift, um dort die Position des Lead-in-Abschnittes auszulesen wenn es an der üblichen Stelle der Reliefdatenspur keinen Lead-in-Abschnitt vorfindet.

Zum Lesen des Datenbereiches der neuen Datenträgerscheibe ist bei vom üblichen Standard abweichenden Lead-in-Abschnitt ein spezielles Lesegerät notwendig, das sobald es keine oder unvollständige Organisationsinformationen in dem Lead-in-Abschnitt vorfindet, automatisch auf den Zusatzspeicher zugreift, um sich dort die entsprechenden Informationen zu holen. In dem Zusatzspeicher können außer den Organisationsinformationen der Datenstruktur auch weitere Daten zur automatischen Identifizierung und zur Lokalisierung der Datenträgerscheibe gespeichert sein. Sämtliche Informationen des Zusatzspeichers können auch mit einem geeigneten Scanner unabhängig von dem Lesegerät mit der optischen Abtasteinrichtung aus dem Zusatzspeicher berührungslos ausgelesen und gegebenenfalls berührungslos in diesen eingelesen werden. Dies ist insbesondere für das Aus- und Einlagern der Datenträgerscheibe in einem Archiv sinnvoll sowie für die Abgabe an einen Benutzer. Eine derartige Datenträgerscheibe ermöglicht eine vollautomatische Registrierung der Datenträgerscheibe und die Buchung von Bewegungsdaten der Scheibe. Außerdem kann der Zusatzspeicher Kopierschutzanweisungen für das Lesegerät enthalten, die eine nicht autorisierte Vervielfältigung des Inhaltes verhindern.

Nachfolgend wird die Erfindung anhand eines in der Zeichnung dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale können für sich allein oder zu mehreren bei unterschiedlichen Ausführungsformen der Erfindung verwirklicht sein. Es zeigen:
- Figur 1: eine erfindungsgemäße optische Datenträgerscheibe in Draufsicht, mit einem Halbfertigprägestempel als Informationsschicht;
- Figur 2: die Datenträgerscheibe aus Figur 1 in Querschnittsdarstellung;
- Figur 3: ein Lesegerät zum Auslesen der erfindungsgemäßen optischen Datenträgerscheibe gemäß Figur 1 in schematischer Darstellung; und
- Figur 4: einen Glasmaster zur Herstellung des Halbfertigprägestempels aus Figur 1 in Querschnittsdarstellung.

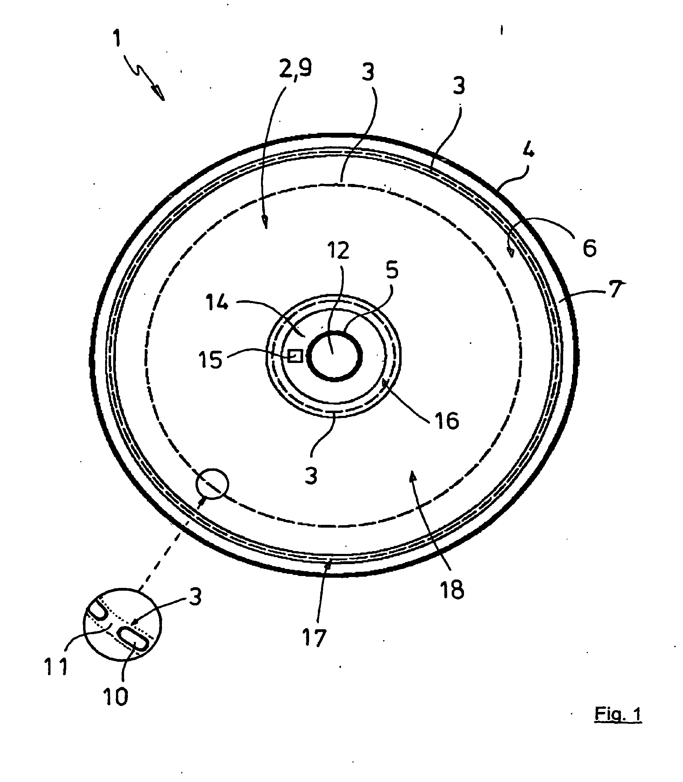

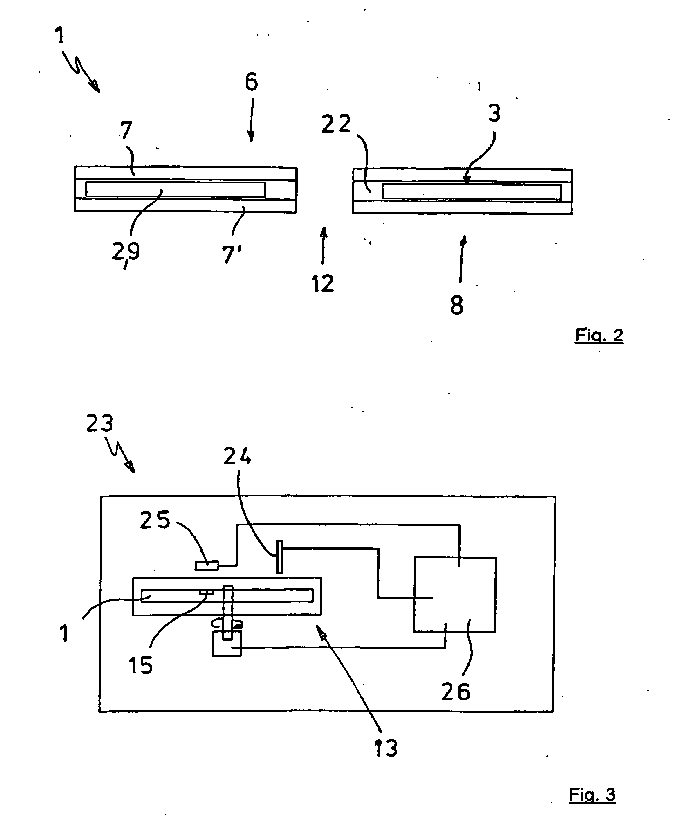

In der Figur 1 ist eine erfindungsgemäße optische Datenträgerscheibe 1, beispielsweise eine CD, DVD oder BD abgebildet, die mittels einer nur in der Figur 3 dargestellten optischen Abtasteinrichtung lesbar ist. Die Datenträgerscheibe 1 weist eine "read-oniy" Informationsschicht 2 mit einer spiralförmigen Reliefdatenspur 3 auf, die sich von einem äußeren Rand 4 zu einem inneren Rand 5 der Datenträgerscheibe 1 erstreckt. In der Zeichnung sind nur einige Windungen der Reliefdatenspur 3 schematisch dargestellt. Tatsächlich umfasst die Reliefdatenspur 3 etwa 100 oder mehr derartige Windungen. Über der Reliefdatenspur 3 ist auf einer Oberseite 6 der Informationsschicht 2 eine für einen Laserstrahl der Abtasteinrichtung durchsichtige Abdeckscheibe 7 angeordnet, die die Informationsschicht 2 vor äußeren Einflüssen schützt. Die Abdeckscheibe 7 ist aus Glas oder Polycarbonat hergestellt. Wie in der Figur 2 erkennbar ist, ist auf einer der Oberseite 6 gegenüberliegenden Unterseite 8 der Informationsschicht 2 eine weitere Abdeckscheibe 7' angeordnet.

Die Informationsschicht 2 ist ein Halbfertigprägestempel 9, wie er für die Prägestempelherstellung von unter Einsatz einer Spritzgießmaschine herzustellenden optischen Datenträgerscheiben verwendet wird. Der Halbfertigprägestempel 9 ist zwischen den zwei transparenten Abdeckscheiben 7, 7' angeordnet und an und zwischen den Rändern 4, 5 der Datenträgerscheibe 1 mit dem Halbfertigprägestempel 9 abdichtend verbunden, insbesondere bei diesem Ausführungsbeispiel verklebt. Die Reliefdatenspur 3 weist Pits 10 und Lands 11 als Datenstruktur auf, in denen die Informationen der Datenträgerscheibe 1 codiert enthalten sind.

Die erfindungsgemäße Datenträgerscheibe 1 weist neben dem Halbfertigprägestempel 9, der konzentrisch zu einer Aufnahmeöffnung 12 für das in der Figur 3 schematisch dargestellte Lesegeräte 13 angeordnet ist, einen ringförmigen Freiraum 14 auf, der sich zwischen dem inneren der Aufnahmeöffnung 12 zugeordneten Rand 5 der Datenträgerscheibe 1 und dem Halbfertigprägestempel 9 erstreckt. In dem Freiraum 14 ist ein berührungslos les- und beschreibbarer Zusatzspeicher 15 in Form eines RFID-Elementes angeordnet. In dem Zusatzspeicher 15 sind Organisationsinformationen der Datenstruktur des Halbfertigprägestempels 9 hinterlegt. Der Halbfertigprägestempel 9 weist entsprechend der Norm einen innenliegenden Lead-in-Abschnitt 16 und einen außenliegenden Lead-out-Abschnitt 17 auf, zwischen denen sich der eigentliche Daten-Abschnitt 18 erstreckt. Der Lead-in-Abschnitt 16, der Daten-Abschnitt 18 und der Lead-out-Abschnitt 17 bilden die Reliefdatenspur 3, wobei der Lead-in-Abschnitt 16 nahe dem Innenrand 5 und der Lead-out-Abschnit 17 nahe dem äußeren Rand 4 als kurzer Teil der Reliefdatenspur 3 angeordnet ist. Der Daten-Abschnitt 18 sowie der Lead-out-Abschnitt 17 enthalten Daten bzw. Informationen gemäß dem üblichen Standard, während der Lead-in-Abschnitt 16 entgegen dem üblichen Standard keine oder unvollständige Organisationsinformationen der Datenstruktur der optischen Datenträgerscheibe 1 enthält.

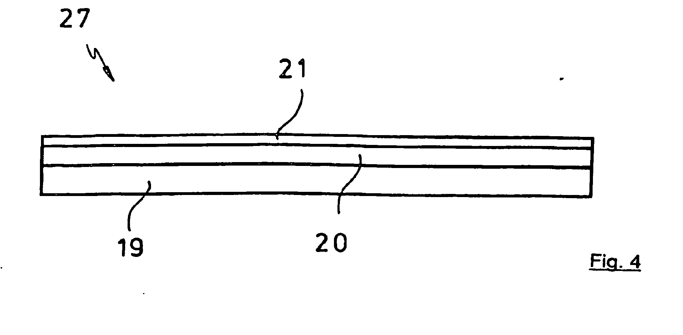

Die Figur 2 zeigt die in der Figur 1 abgebildete Datenträgerscheibe 1 von der Seite. Jetzt sind deutlich die zwei Abdeckscheiben 7, 7' zu erkennen, zwischen denen der Halbfertigprägestempel 9 angeordnet ist. Die Abdeckscheiben 7, 7' für den Halbfertigprägestempel 9 sind mit Klebeschichten 22 mit dem mindestens einen, die Informationsschicht 2 bildenden Halbfertigprägestempel 9 abdichtend verbunden. Die Figur 4 verdeutlicht den Schichtaufbau des zu der Herstellung des Halbfertigprägestempels verwendeten Glasmasters 27. Der Glasmaster 27 umfasst eine Glasschicht 19, eine Photoresistschicht 20 und eine Metallschicht 21. In der Photoresistschicht 20 mit der darüber angeordneten Metallschicht 21 sind die Pits 10 und die Lands 11 ausgebildet, die die Reliefdatenspur 3 bilden.

Die Figur 3 veranschaulicht ein für die vorstehend beschriebene Datenträgerscheibe 1 geeignetes Lesegerät 23 mit einer optischen Abtasteinrichtung 13. Die optische Abtasteinrichtung 13 umfasst eine optische Ausleseeinheit 24, die in üblicher Weise zur Auslesung der optisch gespeicherten Informationen der Informationsdatenschicht 2, d.h. des Halbfertigprägestempels 9 der Datenträgerscheibe 1 ausgebildet ist. Des weiteren ist eine Transponder-Ausleseeinheit 25 für den RFID-Zusatzspeicher 15 vorgesehen. Die Transponder-Ausleseeinheit 25 und die optische Ausleseeinheit 24 sind mit einer elektronischen Steuerung 26 verbunden Nachdem die Steuerung 26 die von der optischen Ausleseeinheit 24 aus dem Lead-in-Abschnitt 16 ausgelesenen Organisationsinformationen für den Daten-Abschnitt 18 als unbrauchbar identifiziert hat, weist sie die Transponder-Ausleseeinheit 25 an, die entsprechende Informationen aus dem RFID-Zusatzspeicher 15 auszulesen. Nachdem dies geschehen ist, wandelt die Steuerung 26 die von der optischen Ausleseeinheit 24 den Daten-Abschnitt 18 entnommenen codierten Daten in üblicher Weise in eine gewünschte Ausgabeform um.

## Patentansprüche

1. Datenträgerscheibe (1), die mittels einer optischen Abtasteinrichtung (13), lesbar ist, mit einer Informationsschicht (2), die Informationen in einer Datenstruktur codiert enthält, welche als spiralförmig verlaufende Reliefdatenspur (3) an der Informationsschicht (2) angeordnet ist, und mit einer für die optische Abtasteinrichtung (13) durchsichtigen Abdeckung (7) für die Informationsschicht (2) auf der Seite mit der Reliefdatenspur (3), **dadurch gekennzeichnet, dass** die Informationsschicht (2) ein mittels eines Glasmasters (27) hergestellter Halbfertigprägestempel (9) ist, der von einer Metallplatte, vorzugsweise einer Nickelplatte gebildet ist, wobei der Halbfertigprägestempel (9) zwischen zwei Abdeckscheiben (7, 7') angeordnet ist, die zumindest an Rändern (4, 5) der Datenträgerscheibe (1) miteinander und/oder mit dem Halbfertigprägestempel (9) abdichtend verbunden sind.

2. Datenträgerscheibe nach Anspruch 1, **dadurch gekennzeichnet, dass** die Datenstruktur einen Lead-in-Abschnitt (16) aufweist, der entgegen dem üblichen Standard an einer anderen Stelle der Reliefdatenspur (3) angeordnet ist und vollständige Organisationsinformationen zu der Datenstruktur enthält, oder der an der üblichen Stelle der Reliefdatenspur (3) angeordnet ist und entgegen dem üblichen Standard unvollständige oder keine Organisationsinformationen zu der Datenstruktur enthält.

3. Datenträgerscheibe nach Anspruch 2, **dadurch gekennzeichnet, dass** die Position des Lead-in-Abschnitts (16) auf der Datenträgerscheibe (1) und/oder die Organisationsinformationen zu der Datenstruktur der Datenträgerscheibe (1) in einem gesonderten berührungslos auslesbaren Zusatzspeicher (15) gespeichert sind.

4. Verwendung eines mittels eines Glasmasters (27) hergestellten Halbfertigprägestempels (9) als Informationsschicht (2), wie er für die Stem-pelherstellung von unter Einsatz einer Spritzgießmaschine herzustellenden optischen Datenträgerscheiben verwendet wird, für eine mittels einer optischen Abtasteinrichtung (13) lesbaren Datenträgerscheibe (1), wobei der Halbfertigprägestempel (9) von einer Metallplatte, vorzugsweise einer Nickelplatte gebildet ist und die Informationen in einer Datenstruktur codiert enthält, welche als spiralförmig verlaufende Reliefdatenspur (3) an der Informationsschicht (2) ausgebildet ist, und mit zumindest einer für die optische Abtasteinrichtung (13) durchsichtigen Abdeckung (7) für die Informationsschicht (2).

## Claims

1. Data carrier disc (1), being readable by means of an optical scanning device (13), with an information layer (2), which contains information encoded in a data structure being arranged as a helically extending relief data track (3) at the information layer (2), and with a cover (7) for the information layer (2) on the side with the relief data track (3), which is transparent for the optical scanning device (13), **characterized in that** the information layer (2) is a semi-finished embossing die (9), which is formed as a metal plate, preferably a nickel plate, wherein the semi-finished embossing die (9) is arranged between two covering panes (7, 7'), which are sealingly connected at least at edges (4, 5) of the data carrier disc (1) to each other and/or to the semi-finished embossing die (9).

2. Data carrier disc (1) according to claim 1, **characterized in that** the data structure comprises a lead-in section (16), which is arranged contrary to the usual standard at a different position of the relief data structure (3) and contains complete organization information on the data structure, or which is arranged at the usual position of the relief data structure and contains contrary to the usual standard incomplete or no organization information on the data structure.

3. Data carrier disc according to claim 2, **characterized in that** the position of the lead-in section (16) on the data disc carrier (1) and/or the organization information of the data structure of the data disc carrier (1) are stored in a separate touchless readable auxiliary storage device (15).

4. Usage of a semi-finished embossing die (9) as information layer (2), being produced by means of a glass-master (27), as used for the die production of optical data carrier discs which are manufactured making use of an injection molding machine, for a data carrier disc (1) being readable by means of an optical scanning device (13), wherein the semi-finished embossing die (9) is formed as a metal plate, preferably a nickel plate and contains the information encoded in a data structure, which is designed as a helically extending relief data structure (3) at the information layer (2), and with at least one cover (7) for the information layer (2) being transparent for the optical scanning device (13).

## Revendications

1. Disque support de données (1) qui peut être lu au moyen d'un dispositif de balayage optique (13), qui comporte une couche d'information (2) qui contient des informations sous une forme codée dans une structure de données qui est disposée sous la forme d'une piste de données en relief (3) s'étendant en spirale sur la couche d'information (2), et un recouvrement (7) pour la couche d'information (2) du côté de la piste de données en relief (3) qui est transparent pour le dispositif de balayage optique (13), **caractérisé en ce que** la couche d'information (2) est une matrice de pressage semi-finie (9) qui est fabriquée au moyen d'un glass master (ou matrice en verre) (27) et est formée d'une plaque métallique, de préférence une plaque en nickel, la matrice de pressage semi-finie (9) étant disposée entre deux disques de recouvrement (7, 7') qui sont reliés entre eux et/ou à la matrice de pressage semi-finie (9) de manière étanche au moins aux bords (4, 5) du disque support de données (1).

2. Disque support de données selon la revendication 1, **caractérisé en ce que** la structure de données présente une section « Lead in » (16) qui, contrairement à la norme habituelle, est disposée à un autre endroit de la piste de données en relief (3) et contient des informations d'organisation complètes sur la structure de données, ou est disposée à l'endroit habituel de la piste de données en relief (3) et, contrairement à la norme habituelle, contient des informations d'organisation incomplètes ou aucune information d'organisation sur la structure de données.

3. Disque support de données selon la revendication 2, **caractérisé en ce que** la position de la section Lead in (16) sur le disque support de données (1) et/ou les informations d'organisation sur la structure de données du disque support de données (1) sont enregistrées dans une mémoire auxiliaire (15) distincte qui peut être lue sans contact.

4. Utilisation d'une matrice de pressage semi-finie (9) qui est fabriquée au moyen d'un glass master (27) comme couche d'information (2), telle qu'elle est utilisée pour la fabrication de matrices de disques supports de données optiques à fabriquer au moyen d'une pression d'injection, pour un disque support de données (1) pouvant être lu au moyen d'un dispositif de balayage optique (13), la matrice de pressage semi-finie (9) étant formée d'une plaque métallique, de préférence d'une plaque en nickel, et contenant les informations sous une forme codée dans une structure de données qui est réalisée sous la forme d'une piste de données en relief (3) s'étendant en spirale sur la couche d'information (2), et avec au moins un recouvrement (7) pour la couche d'information (2) qui est transparent pour le dispositif de balayage optique (13).
